# EUROPÄISCHE PATENTANMELDUNG

(11) **EP 4 779 093 A1**
(43) Veröffentlichungstag der Anmeldung: **22.07.2026**
(21) Anmeldenummer: 26150615.8
(22) Anmeldetag: 07.01.2026
(51) Int. Cl.: E03F 5/14

(54) **SIEBVORRICHTUNG, VERFAHREN ZUM ERFASSEN EINES DURCHHANGS EINES ENDLOSEN ANTRIEBSELEMENTS SOWIE VERWENDUNG EINES POSITIONSSENSORS**

(30) Priorität: 15.01.2025 DE 102025101297
(71) Anmelder: Huber SE, 92334 Berching (DE)
(72) Erfinder: Beck, Andreas, 92318 Neumarkt (DE)
(74) Vertreter: Canzler & Bergmeier Patentanwälte Partnerschaft mbB

(57) **Zusammenfassung**

Die vorliegende Erfindung betrifft eine Siebvorrichtung (1) zum Abscheiden und Abtransport von Verunreinigungen aus Abwasser (3), wobei die Siebvorrichtung (1) zumindest ein endloses Antriebselement (8) umfasst, das während des Betriebs der Siebvorrichtung (1) mit Hilfe wenigstens eines Antriebsmotors (9) der Siebvorrichtung (1) auf einer Umlaufbahn bewegbar ist. Außerdem betrifft die vorliegende Erfindung ein Verfahren zum Erfassen eines Durchhangs eines endlosen Antriebselements (8) einer derartigen Siebvorrichtung (1) und die Verwendung eines Positionssensors (10) zum Erfassen eines Durchhangs eines endlosen Antriebselements (8) einer Siebvorrichtung (1).

## Beschreibung

Die vorliegende Erfindung betrifft eine Siebvorrichtung zum Abscheiden und Abtransport von Verunreinigungen aus Abwasser, wobei die Siebvorrichtung zumindest ein endloses Antriebselement umfasst, das während des Betriebs der Siebvorrichtung mit Hilfe wenigstens eines Antriebsmotors der Siebvorrichtung auf einer Umlaufbahn bewegbar ist. Außerdem betrifft die vorliegende Erfindung ein Verfahren zum Erfassen eines Durchhangs eines endlosen Antriebselements einer derartigen Siebvorrichtung und die Verwendung eines Positionssensors zum Erfassen eines Durchhangs eines endlosen Antriebselements einer Siebvorrichtung.

Entsprechende Siebvorrichtungen sind im Stand der Technik hinlänglich bekannt und dienen beispielsweise der Entfernung von grobem Siebgut (Holz, Steine, etc.) aus einem in einem Abwasserkanal fließenden Abwasser. Die Siebvorrichtung wird hierzu in der Regel derart in den Abwasserkanal integriert, dass sich die Siebfläche, ausgehend von der Kanalsohle, senkrecht oder leicht geneigt nach oben erstreckt. Um einen Austrag des von dem die Siebfläche bildenden Siebrost zurückgehaltenen Siebguts zu ermöglichen, erstreckt sich die Siebfläche meist über den maximal zu erwartenden Wasserspiegel.

Durch einen Umlaufbetrieb von der Siebfläche zugeordneten Räumelementen in Form sogenannter Reinigungsharken wird schließlich das Siebgut entlang der Vorderseite der Siebfläche nach oben in Richtung eines Abwurfs gefördert und dort, beispielsweise mit Hilfe eines Abstreifers, von dem oder den Reinigungsharken entfernt. Um die Reinigungsharken bewegen zu können, weisen entsprechende Siebvorrichtung einen Antriebsmotor auf, der beispielsweise mit zwei benachbart zueinander verlaufenden Antriebselementen verbunden ist, wobei die Antriebselemente wiederum mit den einzelnen Reinigungsharken in Verbindung stehen. Werden die Antriebselemente mit Hilfe des Antriebsmotors auf einer vorgegebenen Umlaufbahn bewegt, so bewegen sich auch die Reinigungsharken auf dieser Umlaufbahn und damit entlang des Siebrostes.

Eine derartige gattungsgemäße Siebvorrichtung ist beispielsweise in der DE 10 2020 116 332 A1 offenbart. Diese Schrift beschäftigt sich mit einer Erfassung und Regelung der Zugspannung der Antriebselemente. Aufgrund der auf die Antriebselemente wirkenden Zugkräfte längen sich diese mit der Zeit, wodurch im Extremfall Betriebsstörungen, wie beispielsweise ein Schlupf zwischen den Antriebselementen und dem Antriebsmotor auftreten können. Die DE 10 2020 116 332 A1 schlägt hierzu vor, die Zugspannung mittels eines auf bekannte Weise ansteigenden Strombedarfs des Antriebsmotors bei steigender Zugspannung einzustellen. Allerdings kann der Strombedarf des Antriebsmotors neben der Zugspannung auch von anderen Faktoren, wie beispielsweise der Menge des anfallenden Siebguts, abhängen. Diese Methode der Erfassung der Zugspannung von Antriebselementen ist daher fehleranfällig. Der vorliegenden Erfindung liegt außerdem die Erkenntnis zugrunde, dass sich eine gefährlich niedrige Zugspannung eines Antriebselements in einem Durchhang dieses Antriebselements äußert.

Aufgabe der vorliegenden Erfindung ist es daher, die bekannte Siebvorrichtung dahingehend zu verbessern, dass ein Durchhang eines Antriebselements in einfacher und genauer Weise erfassbar wird.

Die Aufgabe wird gelöst durch eine Siebvorrichtung, ein Verfahren und eine Verwendung mit den Merkmalen der unabhängigen Patentansprüche.

Die erfindungsgemäße Siebvorrichtung zum Abscheiden und Abtransport von Verunreinigungen aus Abwasser umfasst zumindest ein endloses Antriebselement, das während des Betriebs der Siebvorrichtung mit Hilfe wenigstens eines Antriebsmotors der Siebvorrichtung auf einer Umlaufbahn bewegbar ist.

Das Antriebselement ist vorzugsweise mit einzelnen Reinigungsharken oder einzelnen Siebelementen verbunden, wobei das Antriebselement je nach Ausbildung der Siebvorrichtung entweder die Reinigungsharken oder die Siebelemente bewegt.

Bei dem Antriebselement handelt es sich beispielsweise um eine Antriebskette oder einen Antriebsriemen. Denkbar ist auch, dass die Reinigungsharken oder die Siebelemente über Verbindungselemente, z. B. Gelenke, verbunden sind. Die Verbindungselemente können in diesem Fall mit dem Antriebsmotor in Wirkverbindung stehen, so dass jeweils eine Mehrzahl von Verbindungselementen als ein Antriebselement angesehen werden. Ebenso ist es denkbar, dass die Reinigungsharken oder Siebelemente zusätzlich zu den Verbindungselementen nach außen ragende Bolzen aufweisen, die dann mit jeweils einem Antriebsrad in Wirkverbindung stehen. Ein Antriebselement wird in diesem Fall jeweils durch die Verbindungselemente und Bolzen gebildet, die sich auf derselben Seite der Reinigungsharken oder Siebelemente befinden.

Jedes Antriebselement umfasst also vorzugsweise eine Vielzahl von, vorzugsweise relativ zueinander bewegbaren, Einzelelementen, die dann gemeinsam das jeweilige Antriebselement bilden, wobei einzelne oder alle Einzelelemente auch Bestandteil einzelner Reinigungsharken oder Siebelemente sein können.

Die Bewegung des Antriebselements erfolgt mit Hilfe zumindest eines Antriebsmotors der Siebvorrichtung. Das Antriebselement wird vorzugsweise in einem unteren Bereich und einem oberen Bereich der Siebvorrichtung jeweils mit Hilfe einer Umlenkung, insbesondere einem Antriebsrad, wie beispielsweise einem Kettenrad (andere Bezeichnung: Zahnrad) oder einer glatten Umlenkkurve geführt, wobei jeweils eines der Antriebsräder, vorzugsweise das obere Antriebsrad, mit Hilfe eines Antriebsmotors angetrieben wird.

Die erfindungsgemäße Siebvorrichtung zeichnet sich dadurch aus, dass sie einen Positionssensor umfasst, mit dessen Hilfe ein Durchhang des Antriebselements erfassbar ist. Der Positionssensor ermöglicht beispielsweise eine kontinuierliche Überwachung des Betriebszustands des Antriebselements. Wie bereits erwähnt, tritt ein Durchhang des Antriebselements auf, wenn die Zugspannung im Antriebselement abnimmt. Dies geschieht beispielsweise durch Verschleiß, Materialermüdung oder Überlastung. Der Durchhang manifestiert sich in einer Positions- oder Formänderung des Antriebselements gegenüber seiner Sollposition auf der Umlaufbahn. Der Positionssensor kann hierzu beispielsweise den Abstand zwischen dem Antriebselement und einem ortsfesten Referenzpunkt der Siebvorrichtung messen.

Die sensorische Erfassung des Durchhangs ermöglicht eine rechtzeitige Nachspannung oder einen präventiven Austausch des Antriebselements. Hierdurch werden Störungen im Betriebsablauf und eventuelle Folgeschäden an der Siebvorrichtung vermieden.

Der Positionssensor ist vorzugsweise an einer Position der Umlaufbahn angeordnet, an der konstruktionsbedingt eigentlich kein Durchhang zu erwarten ist, aber der Durchhang deutlich messbar ist, falls er beispielsweise verschleißbedingt auftritt. Schwerkraftbedingt ist dies beispielsweise im Bereich einer unteren Umlenkung des Antriebselements der Fall. Der Sensor kann beispielsweise mit einer Auswerteeinheit verbunden sein, die bei Überschreitung eines vorgegebenen Grenzwerts für den Durchhang ein Signal erzeugt.

Der Positionssensor ist vorzugsweise ein berührungslos arbeitender Sensor. Insbesondere eignen sich optische oder kapazitive Sensoren zur Erfassung der Position des Antriebselements. Der Positionssensor ist insbesondere als Näherungssensor ausgebildet.

Besonders vorteilhaft ist es allerdings, wenn der Positionssensor als induktiver Sensor ausgebildet ist. Ein induktiver Sensor eignet sich in besonderem Maße zur Erfassung des Durchhangs des Antriebselements, da er berührungslos und damit verschleißfrei arbeitet. Der induktive Sensor erzeugt ein elektromagnetisches Wechselfeld und detektiert Änderungen in diesem Feld, die durch die Position des insbesondere metallischen Antriebselements hervorgerufen werden. Die Messung erfolgt dabei unabhängig von optischen Umgebungsbedingungen wie Verschmutzungen, Spritzwasser oder Dunkelheit. Dies ist bei der Anwendung in einer Siebvorrichtung für Abwasser von besonderer technischer Bedeutung.

Das Messprinzip des induktiven Sensors basiert vorzugsweise auf einer Änderung der Induktivität einer Messspule, wenn sich Metall im Erfassungsbereich des Sensors befindet. Beispielsweise korreliert der Abstand zwischen Sensor und metallischem Antriebselement dabei mit der gemessenen Induktivitätsänderung. Der induktive Sensor kann insbesondere so ausgelegt sein, dass er einen Messbereich von einigen Millimetern bis zu mehreren Zentimetern abdeckt.

Die Ausgangssignale des induktiven Sensors sind vorzugsweise als analoge Spannungs- und/oder Stromsignale ausgebildet, die proportional zum gemessenen Abstand sind. Diese Signale können beispielsweise von einer Auswerteeinheit der Siebvorrichtung verarbeitet werden.

Auch ist es von Vorteil, wenn der Positionssensor ein aktives Sensorelement und wenigstens ein passives Sensorelement umfasst. Die Verwendung von aktiven und passiven Sensorelementen ermöglicht eine besonders zuverlässige Erfassung des Durchhangs des Antriebselements. Das aktive Sensorelement ist dabei vorzugsweise als signalerzeugende Einheit ausgebildet, während das passive Sensorelement als Signalempfänger oder Reflektor dient. Die beiden Sensorelemente bilden ein zusammenwirkendes Messsystem.

Bei Verwendung eines induktiven Sensors umfasst das aktive Sensorelement insbesondere eine Erregerspule, die ein elektromagnetisches Feld erzeugt. Das passive Sensorelement kann dabei beispielsweise als metallischer Resonator oder als Empfängerspule ausgeführt sein. Die Wechselwirkung zwischen aktivem und passivem Sensorelement wird durch die Position des Antriebselements beeinflusst, wodurch der Durchhang erfassbar ist.

Besondere Vorteile bringt es mit sich, wenn das aktive Sensorelement an einem statischen Maschinenteil der Siebvorrichtung und das wenigstens eine passive Sensorelement an dem Antriebselement angeordnet ist. Die definierte Anordnung der Sensorelemente gewährleistet eine präzise Messung des Durchhangs, da das aktive Sensorelement eine ortsfeste Referenzposition bildet. Ein statisches Maschinenteil im Sinne der Erfindung ist insbesondere ein fest mit dem Rahmen der Siebvorrichtung verbundenes Bauteil, beispielsweise ein Träger, eine Konsole, ein Gehäuseteil und/oder der Rahmen der Siebvorrichtung selbst.

Die Befestigung des passiven Sensorelements am Antriebselement ermöglicht eine direkte Erfassung der Bewegung des Antriebselements. Die Befestigung erfolgt insbesondere durch Verschrauben, Vernieten, Verschweißen, Verkleben und/oder formschlüssiges Einsetzen in dafür vorgesehene Aufnahmen des Antriebselements.

Bei einer Ausführung als induktives Sensorsystem wird durch diese Anordnung eine besonders genaue Abstandsmessung ermöglicht, da sich das am Antriebselement befestigte passive Sensorelement stets im optimalen Erfassungsbereich des aktiven Sensorelements befindet, wenn das Antriebselement seine Sollposition einnimmt. Eine Abweichung von dieser Position durch Durchhang führt zu einer definierten Änderung des Messsignals.

Vorteilhaft ist es, wenn das aktive Sensorelement im Bereich eines Leertrums des Antriebselements angeordnet ist. Leertrum bezeichnet den Abschnitt des Antriebselements, der sich auf dem Rückweg der Umlaufbahn befindet und nicht aktiv am Transport der Verunreinigungen beteiligt ist. In diesem Bereich ist das Antriebselement besonders anfällig für Durchhang, da hier typischerweise die geringste Zugspannung herrscht.

Die Anordnung des aktiven Sensorelements im Bereich des Leertrums ermöglicht eine besonders frühzeitige Erkennung von kritischen Betriebszuständen. Dies liegt daran, dass sich ein Spannungsverlust des Antriebselements zuerst im Leertrum manifestiert, bevor er sich auf den lasttragenden Teil der Umlaufbahn auswirkt.

Vorteilhaft ist es zudem, wenn das wenigstens eine passive Sensorelement als Schaltfahne ausgebildet ist, die insbesondere eine Fläche mit wenigstens einer Aussparung umfasst. Eine Schaltfahne im Sinne der Erfindung ist insbesondere ein flächiges Bauteil, das vorzugsweise aus einem metallischen Werkstoff hergestellt ist. Die Ausbildung des passiven Sensorelements als Schaltfahne ermöglicht eine besonders kostengünstige und robuste Konstruktion. Die Schaltfahne kann beispielsweise aus einem Blech gestanzt oder durch spanende Bearbeitung hergestellt sein.

Die in der Fläche der Schaltfahne vorgesehene Aussparung dient der gezielten Beeinflussung des vom aktiven Sensorelement erzeugten elektromagnetischen Feldes. Durch die Aussparung wird insbesondere eine charakteristische Änderung des Messsignals bewirkt, wenn sich die Schaltfahne am aktiven Sensorelement vorbeibewegt. Die Aussparung kann dabei beispielsweise als Langloch, kreisförmige Öffnung oder als komplexere geometrische Form ausgebildet sein. Insbesondere kann die Schaltfahne eine Ringkontur aufweisen, wobei ein Signal im aktiven Sensorelement ausgelöst wird, wenn ein Teil dieser Ringkontur das aktive Sensorelement passiert.

Die Fläche der Schaltfahne ist vorzugsweise so dimensioniert, dass sie den Erfassungsbereich des aktiven Sensorelements vollständig überdeckt. Die Schaltfahne kann insbesondere an einem Kettenglied oder einer Verbindungslasche des Antriebselements befestigt sein. Durch die Integration der Schaltfahne in das Antriebselement wird eine zuverlässige Positionserfassung auch unter rauen Betriebsbedingungen gewährleistet.

In diesem Zusammenhang ist es besonders vorteilhaft, wenn das Antriebselement Rollen und zwischen den Rollen angeordnete Verbindungselemente umfasst, wobei das wenigstens eine passive Sensorelement an einem der Verbindungselemente angeordnet ist. Das Antriebselement ist bei dieser Ausführungsform insbesondere als Rollenkette ausgebildet. Die Rollen dienen dabei der Kraftübertragung und der Führung des Antriebselements auf der Umlaufbahn. Die Verbindungselemente sind vorzugsweise als Kettenlaschen ausgeführt, die die benachbarten Rollen gelenkig miteinander verbinden. Diese Konstruktion ermöglicht eine flexible und gleichzeitig zugfeste Ausbildung des Antriebselements.

Die Anordnung des passiven Sensorelements an einem Verbindungselement nutzt den vorhandenen Bauraum der Kettenkonstruktion in vorteilhafter Weise aus. Das Verbindungselement bietet insbesondere eine stabile Befestigungsmöglichkeit für das passive Sensorelement, da es selbst fest mit den kraftübertragenden Komponenten der Kette verbunden ist. Die Position des passiven Sensorelements relativ zum Antriebselement bleibt dadurch auch unter Lasteinwirkung konstant.

Das passive Sensorelement kann beispielsweise durch Verschraubung oder Vernietung mit dem Verbindungselement verbunden sein. Vorzugsweise ist das passive Sensorelement so an dem Verbindungselement befestigt, dass es radial nach außen über die Kontur der Rollenkette vorsteht. Dies gewährleistet einen definierten Abstand zum aktiven Sensorelement und vermeidet störende Einflüsse durch andere Komponenten des Antriebselements auf die Messung.

Besondere Vorteile bringt es mit sich, wenn der Positionssensor wenigstens zwei passive Sensorelemente umfasst. Die Verwendung von wenigstens zwei passiven Sensorelementen ermöglicht eine redundante Erfassung des Durchhangs des Antriebselements. Die passiven Sensorelemente sind dabei vorzugsweise in einem definierten Abstand zueinander am Antriebselement angeordnet. Dieser Abstand kann beispielsweise einem ganzzahligen Vielfachen der Teilung des Antriebselements entsprechen.

Durch die Anordnung mehrerer passiver Sensorelemente wird eine höhere Messfrequenz erreicht, da in gleichen Zeitabständen mehr Messsignale erzeugt werden. Dies ermöglicht beispielsweise eine quasi-kontinuierliche Überwachung des Durchhangs. Die zeitliche Abfolge der Messsignale von den verschiedenen passiven Sensorelementen erlaubt zudem Rückschlüsse auf die Bewegungsgeschwindigkeit des Antriebselements.

Die passiven Sensorelemente können insbesondere identisch ausgeführt sein, um die Anzahl unterschiedlicher Bauteile gering zu halten. Die Anzahl und Verteilung der passiven Sensorelemente auf dem Umfang des Antriebselements kann beispielsweise so gewählt werden, dass zu jedem Zeitpunkt mindestens eines der passiven Sensorelemente im Erfassungsbereich des aktiven Sensorelements liegt. Dies gewährleistet eine lückenlose Überwachung des Betriebszustands.

Vorteilhaft ist es, wenn die Siebvorrichtung mehrere Antriebselemente umfasst, wobei für jedes Antriebselement wenigstens ein Positionssensor vorgesehen ist. Die Ausstattung mehrerer Antriebselemente mit jeweils mindestens einem Positionssensor ermöglicht eine umfassende Überwachung des Betriebszustands der gesamten Siebvorrichtung. Die Antriebselemente sind dabei vorzugsweise parallel zueinander angeordnet und können beispielsweise über eine gemeinsame Antriebswelle synchron angetrieben werden. Insbesondere weist die Siebvorrichtung zwei parallel zueinander verlaufende Umlaufbahnen auf, auf denen die Antriebselemente beim Betrieb der Siebvorrichtung bewegt werden (die Umlaufbahnen müssen nicht körperlich vorhanden sein; vielmehr ist unter der Umlaufbahn der Weg gemeint, den die Antriebselemente bei ihrer Bewegung durchlaufen).

Die separate Erfassung des Durchhangs jedes einzelnen Antriebselements ist von besonderer technischer Bedeutung, da sich die Antriebselemente im Betrieb unterschiedlich stark dehnen können. Dies kann beispielsweise durch ungleichmäßige Lastverteilung oder lokale Verschleißerscheinungen bedingt sein. Die individuelle Überwachung ermöglicht die frühzeitige Erkennung von asymmetrischen Betriebszuständen, die zu einer Schiefstellung der von den Antriebselementen bewegten Reinigungselemente führen könnten.

Die Positionssensoren der verschiedenen Antriebselemente sind vorzugsweise baugleich ausgeführt und an geometrisch entsprechenden Positionen der Umlaufbahnen angeordnet. Die Sensorsignale können insbesondere von einer gemeinsamen Auswerteeinheit verarbeitet werden, die einen Vergleich der Durchhangszustände der verschiedenen Antriebselemente ermöglicht. Die Auswerteeinheit kann dabei beispielsweise so ausgelegt sein, dass sie unterschiedliche Grenzwerte für die einzelnen Antriebselemente berücksichtigt.

Vorteile bringt es zudem mit sich, wenn der Positionssensor wasserdicht ist, insbesondere gemäß der IP68-Schutzklasse. Die wasserdichte Ausführung des Positionssensors ist für den Einsatz in einer Siebvorrichtung für Abwasser von besonderer technischer Bedeutung. Die Schutzklasse IP68 bezeichnet dabei gemäß der Norm IEC 60529 einen vollständigen Schutz gegen das Eindringen von Staub sowie einen Schutz gegen dauerhaftes Untertauchen unter definierten Druck- und Zeitbedingungen.

Der wasserdichte Positionssensor ist vorzugsweise in einem hermetisch abgedichteten Gehäuse untergebracht. Die Abdichtung kann beispielsweise durch O-Ringe, Dichtungsmanschetten oder vergossene Durchführungen realisiert sein. Das Gehäuse ist insbesondere aus korrosionsbeständigem Material, beispielsweise Edelstahl oder hochwertigem Kunststoff gefertigt. Eine elektrische Verbindung des Sensors mit einer Auswerteeinheit erfolgt vorzugsweise über wasserdicht ausgeführte Steckverbinder oder fest vergossene Kabelverbindungen.

Das erfindungsgemäße Verfahren eignet sich zum Erfassen eines Durchhangs eines endlosen Antriebselements einer Siebvorrichtung. Die Siebvorrichtung dient insbesondere dem Abscheiden und Abtransport von Verunreinigungen aus Abwasser. Bei dem Verfahren wird das Antriebselement während des Betriebs der Siebvorrichtung mit Hilfe wenigstens eines Antriebsmotors der Siebvorrichtung auf einer Umlaufbahn bewegt. Das Verfahren zeichnet sich dadurch aus, dass eine Position des Antriebselements mittels eines Positionssensors erfasst wird. Das Verfahren ermöglicht beispielsweise eine prozessintegrierte Überwachung des Betriebszustands des Antriebselements während der normalen Funktion der Siebvorrichtung. Die Erfassung der Position erfolgt dabei insbesondere ohne Eingriff in den Reinigungsprozess und ohne Unterbrechung des Betriebs der Siebvorrichtung.

Die Position des Antriebselements wird vorzugsweise kontinuierlich oder in regelmäßigen Zeitabständen erfasst. Der Positionssensor erzeugt dabei insbesondere ein elektrisches Signal, das ein Maß für den Abstand zwischen einem ortsfesten Referenzpunkt und dem Antriebselement darstellt. Eine Abweichung der erfassten Position von einer vorgegebenen Sollposition ist dabei ein Indikator für den Durchhang des Antriebselements.

Die Positionserfassung erfolgt beispielsweise durch Messung der Induktivitätsänderung einer Messspule, wenn sich das Antriebselement durch deren elektromagnetisches Feld bewegt. Das Messverfahren kann insbesondere so ausgelegt sein, dass neben der reinen Positionserfassung auch die Bewegungsgeschwindigkeit des Antriebselements aus der zeitlichen Änderung der Messsignale ermittelt wird.

Die erfassten Positionsdaten können vorzugsweise in einer Auswerteeinheit der Siebvorrichtung verarbeitet werden. Das Verfahren ermöglicht dabei die Bildung von Trendsignalen, die eine vorausschauende Wartung des Antriebselements erlauben. Die Auswertung kann beispielsweise auch einen Vergleich mit Referenzdaten umfassen, die den Normalzustand des Antriebselements charakterisieren.

Besondere Vorteile bringt es mit sich, wenn ein Signal des Positionssensors nur während einer Kontrollfahrt des Antriebselements ausgewertet wird. Eine Kontrollfahrt im Sinne der Erfindung ist insbesondere ein definierter Bewegungsablauf des Antriebselements, der unter kontrollierten Bedingungen durchgeführt wird. Die Beschränkung der Signalauswertung auf die Kontrollfahrt erhöht die Zuverlässigkeit der Messung, da störende Einflüsse aus dem regulären Betrieb minimiert werden. Die Kontrollfahrt kann beispielsweise beim Anfahren der Anlage, in regelmäßigen Wartungsintervallen oder bei Verdacht auf erhöhten Verschleiß durchgeführt werden.

Während der Kontrollfahrt wird das Antriebselement insbesondere über mindestens eine vollständige Umdrehung bewegt, um den Durchhang über die gesamte Länge des Antriebselements zu erfassen. Die Messwerte können dabei mit Referenzwerten verglichen werden, die unter definierten Bedingungen, beispielsweise bei der Erstinbetriebnahme oder nach einer Wartung, aufgenommen wurden. Die Auswertung der Sensorsignale während der Kontrollfahrt kann vorzugsweise auch eine Plausibilitätsprüfung der Messwerte umfassen. Eine Kontrollfahrt kann beispielsweise manuell von einem Bediener der Siebvorrichtung ausgelöst werden oder automatisiert beispielsweise in bestimmten Zeitintervallen erfolgen.

Vorteilhaft ist es, wenn eine Umlaufrichtung des Antriebselements bei der Kontrollfahrt umgekehrt zu einem Normalbetrieb der Siebvorrichtung ist. Die Umkehrung der Umlaufrichtung während der Kontrollfahrt ermöglicht eine besonders aussagekräftige Erfassung des Durchhangs, da der Durchhang hier eventuell deutlicher in Erscheinung tritt und daher besser durch eine Messung erfasst werden kann.

Die umgekehrte Bewegungsrichtung führt zu einer Umlagerung der Kräfte im Antriebselement, wodurch insbesondere Verschleißerscheinungen und Materialermüdungen deutlicher erkennbar werden. Der Positionssensor erfasst bei der Rückwärtsbewegung insbesondere die maximale Auslenkung des Antriebselements, die durch die Umkehr der Bewegungsrichtung eventuell besser messtechnisch erfassbar ist. Das Verfahren kann dabei vorzugsweise so ausgeführt werden, dass zunächst eine Messung im Normalbetrieb und anschließend eine Vergleichsmessung bei umgekehrter Laufrichtung durchgeführt wird. Die Differenz der Messwerte liefert zusätzliche Informationen über den Verschleißzustand des Antriebselements.

Auch ist es von Vorteil, wenn eine Umlaufgeschwindigkeit des Antriebselements bei der Kontrollfahrt langsamer als bei einem Normalbetrieb der Siebvorrichtung ist. Die reduzierte Umlaufgeschwindigkeit während der Kontrollfahrt ermöglicht eine präzisere Erfassung der Position des Antriebselements. Bei verringerter Geschwindigkeit treten weniger dynamische Effekte wie Schwingungen, Pendelbewegungen oder geschwindigkeitsabhängige Verformungen auf, die das Messergebnis beeinflussen könnten. Die Geschwindigkeit bei der Kontrollfahrt beträgt vorzugsweise zwischen 10% und 50% der Normalgeschwindigkeit.

Eine langsamere Bewegung des Antriebselements führt zudem zu einer höheren räumlichen Auflösung der Messung, da der Positionssensor mehr Messpunkte pro Wegstrecke erfassen kann. Dies ist insbesondere bei der Verwendung von passiven Sensorelementen von Vorteil, die am Antriebselement angebracht sind. Die verringerte Geschwindigkeit ermöglicht dabei eine längere Verweildauer der passiven Sensorelemente im Erfassungsbereich des aktiven Sensorelements.

Die Reduzierung der Geschwindigkeit erfolgt vorzugsweise durch eine geregelte Ansteuerung des Antriebsmotors. Der Motor kann beispielsweise über einen Frequenzumrichter betrieben werden, der eine stufenlose Einstellung der Geschwindigkeit ermöglicht. Die Messwerterfassung kann dabei mit der Motorsteuerung synchronisiert werden, um eine definierte Zuordnung der Messwerte zu bestimmten Positionen des Antriebselements zu gewährleisten.

Auch ist es äußert vorteilhaft, wenn ein Maß des Durchhangs durch Mehrfachauslösen des Positionssensors bestimmt wird. Hierbei kann die Form beispielsweise eines passiven Sensorelements derart ausgebildet sein, dass in Abhängigkeit des Durchhangs mehrere aktive Bereiche des passiven Sensorelements ein aktives Sensorelement passieren. Eine Kontur des passiven Sensorelements kann beispielsweise mehrere Erhebungen, Aussparungen oder Unterbrechungen aufweisen, die jeweils ein Auslösesignal des Sensors bewirken.

Somit kommt es bei einem leichten Durchhang beispielsweise zu einem einmaligen Auslösen eines Sensorsignals. Bei größerem Durchhang kommt es bei einer Durchfahrt des passiven Sensorelements zu einem zweimaligen Auslösen des Signals. Bei noch größerem Durchhang kann die Anzahl der Signale weiter steigen.

Die Erfindung betrifft außerdem die Verwendung eines Positionssensors zum Erfassen eines Durchhangs eines endlosen Antriebselements einer Siebvorrichtung, die dem Abscheiden und Abtransport von Verunreinigungen aus Abwasser dient. Die Siebvorrichtung ist hierbei insbesondere gemäß der vorangegangenen Beschreibung ausgebildet. Die Verwendung eines Positionssensors zur Durchhangserfassung stellt eine neue technische Nutzung eines Positionssensors im Bereich der Abwasseraufbereitung dar. Der Positionssensor wird dabei in einer Umgebung eingesetzt, die durch aggressive Medien, hohe Luftfeuchtigkeit und starke mechanische Beanspruchungen gekennzeichnet ist. Die Verwendung ermöglicht beispielsweise eine kontinuierliche Zustandsüberwachung des Antriebselements während des Betriebs der Siebvorrichtung.

Der verwendete Positionssensor ist vorzugsweise für den dauerhaften Einsatz in der beschriebenen Umgebung ausgelegt. Dies wird insbesondere durch eine wasserdichte Kapselung und korrosionsbeständige Materialien erreicht. Die Sensorik kann beispielsweise nach dem induktiven Messprinzip arbeiten, wodurch eine berührungslose und damit verschleißfreie Erfassung des Durchhangs ermöglicht wird.

Die Verwendung des Positionssensors ermöglicht eine neuartige Form der vorausschauenden Wartung von Siebvorrichtungen. Durch die permanente Überwachung des Antriebselements können Verschleißerscheinungen frühzeitig erkannt werden, bevor es zu Funktionsbeeinträchtigungen oder Ausfällen kommt. Die Messsignale des Sensors können dabei vorzugsweise in ein übergeordnetes Prozessleitsystem eingebunden werden, das eine automatisierte Überwachung mehrerer Siebvorrichtungen ermöglicht. Der Positionssensor kann insbesondere so verwendet werden, dass sowohl kontinuierliche Messungen im Normalbetrieb als auch spezielle Kontrollmessungen während Wartungsfahrten durchgeführt werden.

Weitere Vorteile der Erfindung sind in den nachfolgenden Ausführungsbeispielen beschrieben. Es zeigen, jeweils schematisch:
- **Figur 1**: eine schematische Seitenansicht der erfindungsgemäßen Siebvorrichtung,
- **Figur 2**: eine vergrößerte schematische Seitenansicht der Siebvorrichtung im Bereich einer Umlenkung eines Antriebselements ohne Durchhang,
- **Figur 3**: eine vergrößerte schematische Seitenansicht der Siebvorrichtung im Bereich einer Umlenkung eines Antriebselements mit geringem Durchhang, und
- **Figur 4**: eine vergrößerte schematische Seitenansicht der Siebvorrichtung im Bereich einer Umlenkung eines Antriebselements mit großem Durchhang.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

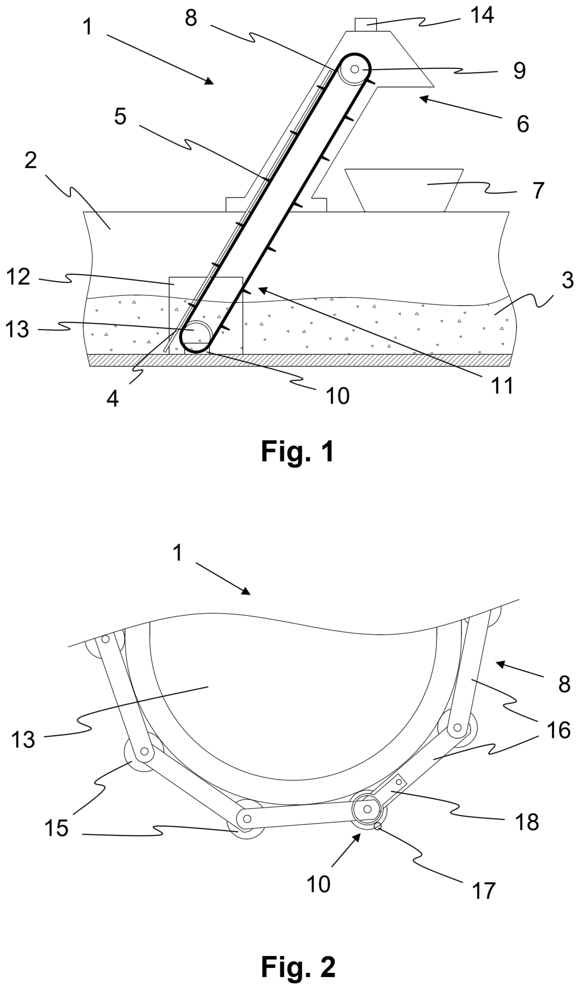

Figur 1 zeigt eine schematische Seitenansicht einer Siebvorrichtung 1, die der Reinigung von Abwasser 3 dient. Die Siebvorrichtung 1 ist in einem Abwasserkanal 2 installiert, wobei ein Siebrost 4 beispielsweise quer zur Strömungsrichtung des Abwassers 3 angeordnet ist. Der Siebrost 4 hält im Abwasser 3 enthaltene grobe Verunreinigungen zurück, während das gereinigte Abwasser 3 den Siebrost 4 passieren kann.

Zum Abtransport der zurückgehaltenen Verunreinigungen dient eine Vielzahl von Reinigungsharken 5, die durch ein endloses Antriebselement 8 in Bewegung versetzt wird. Dabei greifen die Reinigungsharken 5 beispielsweise in das Siebrost 4 und nehmen die dort gesammelten Verunreinigungen mit. Insbesondere werden die Reinigungsharken 5 mittels beidseitig angeordneten Antriebselementen 8 in Bewegung versetzt. Das Antriebselement 8 oder die Antriebselemente 8 werden von einem Antriebsmotor 9 angetrieben und sind über eine untere Umlenkung 13 geführt. Die von den Reinigungsharken 5 nach oben transportierten Verunreinigungen werden beispielsweise über einen Abwurf 6 in einen Container 7 geleitet, wo sie gesammelt werden.

Im unteren Bereich der Siebvorrichtung 1 bildet das Antriebselement 8 ein Leertrum 11, das besonders anfällig für Durchhang ist, da hier die geringste Zugspannung im Antriebselement 8 herrscht. Insbesondere in diesem kritischen Bereich ist ein Positionssensor 10 angeordnet, der zur Erfassung des Durchhangs des Antriebselements 8 dient. Der Positionssensor 10 ist dabei vorzugsweise als induktiver Sensor ausgeführt und an einem statischen Maschinenteil 12 der Siebvorrichtung 1 angeordnet.

Die Anordnung des Positionssensors 10 im Bereich des Leertrums 11 ist besonders vorteilhaft, da hier bereits geringe Änderungen der Zugspannung zu messbaren Positionsänderungen des Antriebselements 8 führen. Der Positionssensor 10 kann dabei den Abstand zwischen dem Antriebselement 8 und dem statischen Maschinenteil 12 beispielsweise kontinuierlich erfassen. Eine Zunahme dieses Abstands ist ein direkter Indikator für einen zunehmenden Durchhang des Antriebselements 8.

Die erfassten Messwerte werden beispielsweise an eine Auswerteeinheit 14 übermittelt. Insbesondere verarbeitet die Auswerteeinheit 14 die Signale des Positionssensors 10 und kann bei Überschreitung definierter Grenzwerte entsprechende Warnsignale generieren.

Die in Figur 1 gezeigte Anordnung gewährleistet eine zuverlässige Überwachung des Antriebselements 8 während des Betriebs der Siebvorrichtung 1. Die in diesem Ausführungsbeispiel schräge Einbaulage des Siebrosts 4 unterstützt dabei den Abtransport der Verunreinigungen, da diese durch die Schwerkraft zum unteren Ende des Siebrosts 4 rutschen, wo sie von den Reinigungsharken 5 erfasst werden. Selbstverständlich sind auch andere Anordnungen des Siebrosts 4, der Antriebselemente 8 und der Reinigungsharken 5 denkbar.

Figur 2 zeigt eine vergrößerte schematische Darstellung eines Teilbereichs der Siebvorrichtung 1 im Bereich der Umlenkung 13, wobei das Antriebselement 8 in einem ordnungsgemäß gespannten Zustand ohne Durchhang dargestellt ist.

Das Antriebselement 8 ist in diesem Ausführungsbeispiel als Rollenkette ausgeführt und umfasst eine Vielzahl von Rollen 15, die durch Verbindungselemente 16 gelenkig miteinander verbunden sind. Diese Konstruktion ermöglicht eine flexible und gleichzeitig zugfeste Ausbildung des Antriebselements 8. Es können auch größere Kräfte bei niedriger Reibung des Antriebselements 8 übertragen werden. Die Rollen 15 dienen dabei sowohl der Kraftübertragung als auch der präzisen Führung des Antriebselements 8 um die Umlenkung 13.

Im dargestellten Bereich ist ein Positionssensor 10 angeordnet, der in diesem Ausführungsbeispiel ein aktives Sensorelement 17 und ein passives Sensorelement 18 umfasst. Das aktive Sensorelement 17 ist hierbei insbesondere an dem hier nicht dargestellten statischen Maschinenteil 12 angeordnet. Das aktive Sensorelement 17 ist vorzugsweise als induktiver Sensor mit einer Erregerspule ausgebildet und erzeugt ein elektromagnetisches Feld zur Positionserfassung. Das passive Sensorelement 18 ist an einem Verbindungselement 16 des Antriebselements 8 befestigt und bewegt sich mit diesem mit.

Die Befestigung des passiven Sensorelements 18 am Verbindungselement 16 ist besonders vorteilhaft, da die Verbindungselemente 16 eine stabile Montagemöglichkeit bieten und gleichzeitig die Position des passiven Sensorelements 18 relativ zum Antriebselement 8 auch unter Lasteinwirkung konstant bleibt. Das passive Sensorelement 18 ist dabei beispielsweise so am Verbindungselement 16 angeordnet, dass es radial nach außen über die Kontur der Rollenkette vorsteht, wodurch ein definierter Abstand zum aktiven Sensorelement 17 gewährleistet wird.

Das aktive Sensorelement 17 und das passive Sensorelement 18 sind insbesondere derart angeordnet, dass in der dargestellten Situation ohne Durchhang gerade kein Signal des Positionssensors 10 ausgelöst wird. Diese Konstellation stellt den Referenzzustand dar, von dem ausgehend Abweichungen durch Durchhang detektiert werden können. Die Rollen 15 des Antriebselements 8 sind dabei gleichmäßig beabstandet, wodurch eine gleichförmige Bewegung um die Umlenkung 13 ermöglicht wird.

Die gezeigte Anordnung ermöglicht eine präzise Erfassung der Position des Antriebselements 8, da das passive Sensorelement 18 bei jeder Umdrehung des Antriebselements 8 den Erfassungsbereich des aktiven Sensorelements 17 passiert. Durch die regelmäßige Erfassung der Position können Veränderungen im Laufverhalten des Antriebselements 8 frühzeitig erkannt werden.

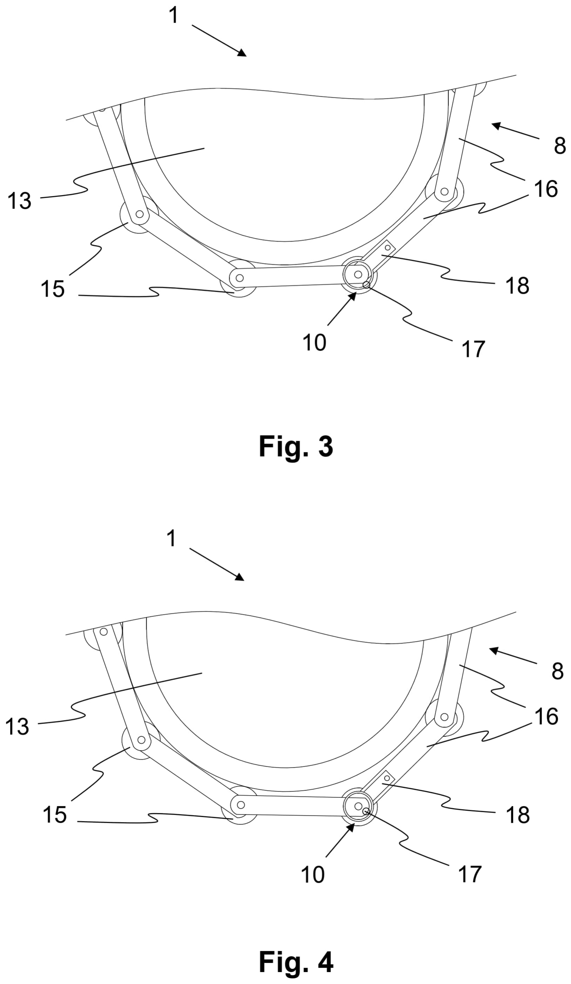

Figur 3 zeigt denselben Ausschnitt der Siebvorrichtung 1 wie Figur 2, jedoch in einem Betriebszustand, bei dem das Antriebselement 8 einen geringen Durchhang aufweist. Dieser Durchhang manifestiert sich in einer veränderten Position des Antriebselements 8 im Vergleich zum Referenzzustand aus Figur 2.

Der Positionssensor 10 erfasst diese Veränderung durch die relative Bewegung zwischen dem aktiven Sensorelement 17 und dem passiven Sensorelement 18. Das aktive Sensorelement 17 und das passive Sensorelement 18 sind insbesondere derart angeordnet, dass in der dargestellten Situation mit geringem Durchhang bei einem Umlauf des Antriebselements 8 der Positionssensor 10 genau einmal ausgelöst wird.

Die dargestellte Situation zeigt einen frühen Verschleißzustand des Antriebselements 8, bei dem der Durchhang noch im tolerierbaren Bereich liegt. Die frühzeitige Erkennung solcher Verschleißerscheinungen ist von besonderer technischer Bedeutung, da sie präventive Wartungsmaßnahmen ermöglicht. Die Position des aktiven Sensorelements 17 ist dabei so gewählt, dass auch geringe Positionsänderungen des Antriebselements 8 zuverlässig detektiert werden können.

Figur 4 zeigt denselben Ausschnitt der Siebvorrichtung 1 wie die Figuren 2 und 3, jedoch in einem Betriebszustand mit stark ausgeprägtem Durchhang des Antriebselements 8. Dieser Zustand repräsentiert einen kritischen Verschleißzustand, bei dem die Funktionssicherheit der Siebvorrichtung 1 gefährdet ist.

Der im Vergleich zu Figur 3 deutlich vergrößerte Durchhang des Antriebselements 8 ist an der erheblichen Absenkung der Rollen 15 und Verbindungselemente 16 erkennbar. Die Position des Antriebselements 8 weicht signifikant von der Sollposition ab, was beispielsweise auf einen starken Verschleiß und eine entsprechend reduzierte Zugspannung hinweist. Der Abstand zwischen den Rollen 15 und der Umlenkung 13 hat sich gegenüber dem Normalzustand aus Figur 2 deutlich vergrößert.

In diesem Ausführungsbeispiel ist die Kontur des als Schaltfahne ausgebildeten passiven Sensorelements 18 besonders relevant. Das passive Sensorelement 18 weist eine Ringkontur auf, die beispielswiese bei einem erhöhten Durchhang des Antriebselements 8 bei einem Umlauf, bzw. bei einem Durchlauf des passiven Sensorelements 18 am aktiven Sensorelement 17, zu einem zweifachen Auslösen eines Sensorsignals bei dem Positionssensor 10 führt. Das Antriebselement 8 bewegt sich aufgrund des erhöhten Durchhangs insbesondere derart, dass das aktive Sensorelement 17 zunächst in die Ringkontur des passiven Sensorelements 18 eindringt und hierbei das erste Signal erzeugt wird. Durch die kontinuierliche Bewegung des Antriebselements 8 verlässt das aktive Sensorelement 17 die Ringkontur danach wieder, wodurch das zweite Sensorsignal ausgelöst wird. Hierdurch kann in einfacher Weise ein Maß des Durchhangs des Antriebselements 8 festgestellt werden.

Die dargestellte Situation verdeutlicht die Notwendigkeit einer umgehenden Wartung des Antriebselements 8. Der ausgeprägte Durchhang kann zu verschiedenen Betriebsstörungen führen, wie beispielsweise einer ungleichmäßigen Bewegung des Antriebselements 8, einem erhöhten Verschleiß der Rollen 15 und Verbindungselemente 16 einer verminderten Effektivität der Reinigungsharken 5 und/oder einem möglichen Übersprung des Antriebselements 8 an der Umlenkung 13 oder am Antriebsmotor 9. Das Zusammenwirken von aktivem Sensorelement 17 und passivem Sensorelement 18 ermöglicht die zuverlässige Erkennung solcher kritischen Betriebszustände.

### Bezugszeichenliste

- 1: Siebvorrichtung
- 2: Abwasserkanal
- 3: Abwasser
- 4: Siebrost
- 5: Reinigungsharke
- 6: Abwurf
- 7: Container
- 8: Antriebselement
- 9: Antriebsmotor
- 10: Positionssensor
- 11: Leertrum
- 12: Maschinenteil
- 13: Umlenkung
- 14: Auswerteeinheit
- 15: Rolle
- 16: Verbindungselement
- 17: aktives Sensorelement
- 18: passives Sensorelement

## Patentansprüche

1. Siebvorrichtung (1) zum Abscheiden und Abtransport von Verunreinigungen aus Abwasser (3), wobei die Siebvorrichtung (1) zumindest ein endloses Antriebselement (8) umfasst, das während des Betriebs der Siebvorrichtung (1) mit Hilfe wenigstens eines Antriebsmotors (9) der Siebvorrichtung (1) auf einer Umlaufbahn bewegbar ist, **dadurch gekennzeichnet, dass** die Siebvorrichtung (1) einen Positionssensor (10) umfasst, mit dessen Hilfe ein Durchhang des Antriebselements (8) erfassbar ist.

2. Siebvorrichtung (1) nach dem vorherigen Anspruch, **dadurch gekennzeichnet, dass** der Positionssensor (10) als induktiver Sensor ausgebildet ist.

3. Siebvorrichtung (1) nach einem der vorherigen Ansprüche, **dadurch gekennzeichnet, dass** der Positionssensor (10) ein aktives Sensorelement (17) und wenigstens ein passives Sensorelement (18) umfasst.

4. Siebvorrichtung (1) nach dem vorherigen Anspruch, **dadurch gekennzeichnet, dass** das aktive Sensorelement (17) an einem statischen Maschinenteil (12) der Siebvorrichtung (1) und das wenigstens eine passive Sensorelement (18) an dem Antriebselement (8) angeordnet ist.

5. Siebvorrichtung (1) nach einem der Ansprüche 3 oder 4, **dadurch gekennzeichnet, dass** das aktive Sensorelement (17) im Bereich eines Leertrums (11) des Antriebselements (8) angeordnet ist.

6. Siebvorrichtung (1) nach einem der Ansprüche 3 bis 5, **dadurch gekennzeichnet, dass** das wenigstens eine passive Sensorelement (18) als Schaltfahne ausgebildet ist, die insbesondere eine Fläche mit wenigstens einer Aussparung umfasst.

7. Siebvorrichtung (1) nach einem der Ansprüche 3 bis 6, **dadurch gekennzeichnet, dass** das Antriebselement (8) Rollen (15) und zwischen den Rollen (15) angeordnete Verbindungselemente (16) umfasst, wobei das wenigstens eine passive Sensorelement (18) an einem der Verbindungselemente (16) angeordnet ist.

8. Siebvorrichtung (1) nach einem der Ansprüche 3 bis 7, **dadurch gekennzeichnet, dass** der Positionssensor (10) wenigstens zwei passive Sensorelemente (18) umfasst.

9. Siebvorrichtung (1) nach einem der vorherigen Ansprüche, **dadurch gekennzeichnet, dass** die Siebvorrichtung (1) mehrere Antriebselemente (8) umfasst, wobei für jedes Antriebselement (8) wenigstens ein Positionssensor (10) vorgesehen ist.

10. Verfahren zum Erfassen eines Durchhangs eines endlosen Antriebselements (8) einer Siebvorrichtung (1), die dem Abscheiden und Abtransport von Verunreinigungen aus Abwasser (3) dient, wobei das Antriebselement (8) während des Betriebs der Siebvorrichtung (1) mit Hilfe wenigstens eines Antriebsmotors (9) der Siebvorrichtung (1) auf einer Umlaufbahn bewegt wird, **dadurch gekennzeichnet, dass** eine Position des Antriebselements (8) mittels eines Positionssensors (10) erfasst wird.

11. Verfahren nach dem vorherigen Anspruch, **dadurch gekennzeichnet, dass** ein Signal des Positionssensors (10) nur während einer Kontrollfahrt des Antriebselements (8) ausgewertet wird.

12. Verfahren nach dem vorherigen Anspruch, **dadurch gekennzeichnet, dass** eine Umlaufrichtung des Antriebselements (8) bei der Kontrollfahrt umgekehrt zu einem Normalbetrieb der Siebvorrichtung (1) ist.

13. Verfahren nach einem der Ansprüche 11 oder 12, **dadurch gekennzeichnet, dass** eine Umlaufgeschwindigkeit des Antriebselements (8) bei der Kontrollfahrt langsamer als bei einem Normalbetrieb der Siebvorrichtung (1) ist.

14. Verfahren nach einem der Ansprüche 10 bis 13, **dadurch gekennzeichnet, dass** ein Maß des Durchhangs durch Mehrfachauslösen des Positionssensors (10) bestimmt wird.

15. Verwendung eines Positionssensors (10) zum Erfassen eines Durchhangs eines endlosen Antriebselements (8) einer Siebvorrichtung (1), die dem Abscheiden und Abtransport von Verunreinigungen aus Abwasser (3) dient, wobei die Siebvorrichtung (1) insbesondere gemäß einem der Ansprüche 1 bis 10 ausgebildet ist.
